(19) Europäisches Patentamt
European Patent Office
Office européen des brevets

(11) EP 3 034 957 B1

(12) **FASCICULE DE BREVET EUROPEEN**

(45) Date de publication et mention
de la délivrance du brevet:
**09.12.2020 Bulletin 2020/50**

(51) Int Cl.:
*F24F 11/00* (2018.01)  *E04B 2/00* (2006.01)
*E04B 1/70* (2006.01)  *F24F 13/22* (2006.01)

(21) Numéro de dépôt: **15199564.4**

(22) Date de dépôt: **11.12.2015**

(54) **PROCÉDÉ ET DISPOSITIF DE CONTRÔLE D'UNE VENTILATION MÉCANIQUE CONTRÔLÉE**

VERFAHREN UND VORRICHTUNG ZUR STEUERUNG EINER KONTROLLIERTEN
MECHANISCHEN BELÜFTUNG

METHOD AND DEVICE FOR CONTROLLING A CONTROLLED MECHANICAL VENTILATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.12.2014 FR 1462437**

(43) Date de publication de la demande:
**22.06.2016 Bulletin 2016/25**

(73) Titulaire: **SAGEMCOM ENERGY & TELECOM SAS
92500 Rueil-Malmaison (FR)**

(72) Inventeur: **SABATIER, Pierre
92500 RUEIL MALMAISON (FR)**

(74) Mandataire: **Cabinet Le Guen Maillet
3, impasse de la Vigie
CS 71840
35418 Saint-Malo Cedex (FR)**

(56) Documents cités:
**WO-A1-2010/093272     DE-A1-102011 013 944
FR-A3- 2 954 970       FR-A3- 2 973 102
US-A1- 2003 129 940**

## Description

La présente invention concerne un contrôle d'une ventilation mécanique contrôlée d'un bâtiment pour limiter, voire éviter, la formation de condensation au niveau de couches d'isolant de parois isolées dudit bâtiment.

Chaque bâtiment définit un environnement intérieur délimité, par des cloisons isolées, d'un environnement extérieur. Les cloisons isolées sont composées de couches successives de matériaux, dont au moins un matériau isolant. Chaque couche de matériau présente une perméance à la vapeur d'eau, dénotée *P*, définie de la manière suivante :

$$P = \pi/e$$

où *e* représente l'épaisseur de ladite couche et $\pi$ représente la perméabilité à la vapeur d'eau du matériau constitutif de ladite couche. La perméabilité $\pi$ représente la quantité d'humidité traversant une épaisseur d'un mètre dudit matériau par heure pour une différence de pression partielle de vapeur d'eau entre les deux surfaces externes du matériau égale à 1 mmHg (millimètre de mercure) soit 133,3 Pascals. L'inverse de la perméance *P*, appelée résistance à la diffusion de vapeur d'eau $R_D$, est la capacité que possède une couche de matériau à résister à la diffusion de vapeur d'eau :

$$R_D = 1/P$$

La pression partielle d'un gaz, tel que de la vapeur d'eau, dans un mélange de gaz de pression totale est définie comme la pression qui serait exercée par les molécules dudit gaz si ce gaz occupait seul tout le volume offert au mélange de gaz, à la température dudit mélange de gaz. La pression partielle d'un gaz correspond donc à la contribution dudit gaz à la pression totale du mélange de gaz.

Entre l'environnement intérieur et l'environnement extérieur au niveau d'une paroi du bâtiment, il existe donc un flux de chaleur entre l'environnement le plus chaud et l'environnement le plus froid, ainsi qu'une migration de vapeur d'eau, qui dépend de la pression partielle de vapeur aux surfaces de la paroi (dans le sens de la plus forte vers la plus faible) et de la résistance à la diffusion de vapeur d'eau $R_D$ des couches successives des matériaux constitutifs de la paroi.

Lorsqu'une paroi isolée est perméable à la vapeur d'eau, il peut ainsi se produire de la condensation dans le cœur même de la paroi, ce qui peut entraîner une dégradation du matériau isolant contenu dans la paroi. Le pouvoir isolant du bâtiment s'en trouve donc diminué, ce qui entraîne des déperditions énergétiques.

La demande de certificat d'utilité publiée sous la référence FR 2 954 970 A3 divulgue un procédé de régulation de la température dans un bâtiment d'habitation à murs microporeux et à isolation thermique extérieure par circulation d'air extérieur dans les murs et/ou entre les murs et leur isolation thermique, en fonction de l'hygrométrie de l'air extérieur, de l'hygrométrie du mur et du chauffage ou du refroidissement des murs.

La demande de certificat d'utilité publiée sous la référence FR 2 973 102 A3 divulgue un procédé de réglage de la température et du taux d'humidité relative de l'air dans un bâtiment comprenant des murs extérieurs microporeux et une isolation thermique extérieure avec des espaces de circulation, entre les murs et leur isolation thermique, d'un air sensiblement saturé en vapeur d'eau.

Il est alors souhaitable de fournir une solution qui permette de préserver l'intégrité des matériaux isolants contenus dans les parois isolées d'un bâtiment, en limitant, voire en évitant, la formation de condensation au niveau de l'isolant desdites parois isolées.

L'invention concerne un procédé de contrôle d'une ventilation mécanique contrôlée d'un bâtiment comportant un ensemble de parois isolées constituées de couches successives de matériaux dont au moins un est un isolant, la ventilation mécanique contrôlée ayant une vitesse de ventilation contrôlable par un dispositif de contrôle. Le procédé est tel que le dispositif de contrôle obtient des informations représentatives de mesures de température et de pression de vapeur d'eau de part et d'autre des parois isolées ; et, pour chaque paroi isolée, le dispositif de contrôle effectue les étapes suivantes : déterminer, à partir des informations représentatives des mesures de température, des températures effectives à des jonctions respectives d'isolant dans ladite paroi isolée ; déterminer, à partir des températures déterminées aux jonctions d'isolant dans ladite paroi isolée, des pressions de vapeur d'eau saturantes aux jonctions respectives d'isolant dans ladite paroi isolée ; déterminer, à partir des informations représentatives des mesures de pression de vapeur d'eau, des pressions de vapeurs d'eau effectives aux jonctions respectives d'isolant dans ladite paroi isolée ; et effectuer une comparaison des pressions de vapeurs d'eau effectives aux jonctions d'isolant dans ladite paroi isolée avec les pressions de vapeur d'eau saturantes respectives. De plus, le procédé est tel que le dispositif de contrôle augmente la vitesse de ventilation de la ventilation mécanique contrôlée lorsque la comparaison montre une formation de condensation à au moins une jonction d'isolant dans au moins une paroi isolée. Ainsi, l'intégrité des matériaux isolants contenus dans les parois isolées du bâtiment est préservée, en limitant, voire en évitant, la formation de condensation au niveau de l'isolant desdites parois isolées

Selon un mode de réalisation particulier, le dispositif de contrôle effectue une phase préalable d'initialisation comportant les étapes suivantes : déterminer, grâce à une base de données dédiée, une perméabilité $\pi$ à la vapeur d'eau et un coefficient de conductivité thermique $\lambda$ de chaque matériau constitutif de chaque paroi isolée ; obtenir une définition des épaisseurs des couches successives des matériaux constitutifs de la paroi ; déterminer une résistance à la diffusion de vapeur d'eau $R_D$ de chaque couche de chaque paroi isolée, à partir de la perméabilité $\pi$ à la vapeur d'eau du matériau de ladite couche et de l'épaisseur de ladite couche ; déterminer une résistance thermique $R$ de chaque couche de chaque paroi isolée, à partir du coefficient de conductivité thermique $\lambda$ du matériau de ladite couche et de l'épaisseur de ladite couche. De plus, le procédé est tel que, pour chaque paroi isolée, le dispositif de contrôle détermine les températures effectives aux jonctions respectives d'isolant dans ladite paroi isolée, à partir en outre de la résistance thermique $R$ de chaque couche de ladite paroi isolée. Enfin, le procédé est tel que, pour chaque paroi isolée, le dispositif de contrôle détermine les pressions de vapeurs d'eau effectives aux jonctions d'isolant dans ladite paroi isolée, à partir en outre de la résistance à la diffusion de vapeur d'eau $R_D$ de chaque couche de ladite paroi isolée.

Selon un mode de réalisation particulier, la ventilation mécanique contrôlée étant hygroréglable, le dispositif de contrôle augmente la vitesse de ventilation en diminuant une consigne, appliquée à ladite ventilation mécanique contrôlée hygroréglable, représentative d'une pression de vapeur d'eau cible.

Selon un mode de réalisation particulier, le bâtiment disposant d'un système de chauffage, le dispositif de contrôle diminue en outre une consigne de température, appliquée audit système de chauffage, lorsque la comparaison montre une formation de condensation à au moins une jonction d'isolant dans au moins une paroi isolée.

Selon un mode de réalisation particulier, le dispositif de contrôle détermine si au moins un occupant est présent dans le bâtiment et, le dispositif de contrôle diminue la consigne de température uniquement lorsque le dispositif de contrôle considère qu'aucun occupant n'est présent dans le bâtiment.

Selon un mode de réalisation particulier, le dispositif de contrôle détermine si au moins un occupant est présent dans le bâtiment et, lorsque le dispositif de contrôle considère qu'au moins un occupant est présent dans le bâtiment, le dispositif de contrôle agit sur la consigne de température dans un intervalle de température prédéfini de borne inférieure plus élevée que la borne inférieure d'un autre intervalle de température dans lequel le dispositif de contrôle ajuste la consigne de température quand aucun occupant n'est présent dans le bâtiment.

L'invention concerne également un dispositif de contrôle adapté pour effectuer un contrôle d'une ventilation mécanique contrôlée d'un bâtiment comportant un ensemble de parois isolées constituées de couches successives de matériaux dont au moins un est un isolant, la ventilation mécanique contrôlée ayant une vitesse de ventilation contrôlable par le dispositif de contrôle. Le dispositif de contrôle est tel qu'il comporte des moyens pour obtenir des informations représentatives de mesures de température et de pression de vapeur d'eau de part et d'autre des parois isolées ; et, pour chaque paroi isolée, le dispositif de contrôle comporte : des moyens pour déterminer, à partir des informations représentatives des mesures de température, des températures effectives à des jonctions respectives d'isolant dans ladite paroi isolée ; des moyens pour déterminer, à partir des températures déterminées aux jonctions d'isolant dans ladite paroi isolée, des pressions de vapeur d'eau saturantes aux jonctions respectives d'isolant dans ladite paroi isolée ; des moyens pour déterminer, à partir des informations représentatives des mesures de pression de vapeur d'eau, des pressions de vapeurs d'eau effectives aux jonctions respectives d'isolant dans ladite paroi isolée ; et des moyens pour effectuer une comparaison des pressions de vapeurs d'eau effectives aux jonctions d'isolant dans ladite paroi isolée avec les pressions de vapeur d'eau saturantes respectives. De plus, le dispositif de contrôle comporte des moyens pour augmenter la vitesse de ventilation de la ventilation mécanique contrôlée lorsque la comparaison montre une formation de condensation à au moins une jonction d'isolant dans au moins une paroi isolée.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un système de régulation de migration de vapeur d'eau dans des parois isolées d'un bâtiment ;
- la Fig. 2 illustre schématiquement un exemple d'architecture matérielle d'un dispositif de contrôle du système de la Fig. 1 ;
- la Fig. 3 illustre schématiquement un algorithme, mis en œuvre par le dispositif de contrôle, de contrôle d'un mécanisme de surveillance des parois isolées du bâtiment ;
- la Fig. 4 illustre schématiquement un algorithme, mis en œuvre par le dispositif de contrôle, de surveillance des parois isolées du bâtiment ;
- la Fig. 5 illustre schématiquement un algorithme, mis en œuvre par le dispositif de contrôle, de contremesure suite à une détection de présence d'eau par formation de condensation au niveau de l'isolant d'au moins une paroi isolée du bâtiment, selon un premier mode de réalisation ;

- la Fig. 6 illustre schématiquement un algorithme, mis en œuvre par le dispositif de contrôle, de contremesure suite à une détection de présence d'eau par formation de condensation au niveau de l'isolant d'au moins une paroi isolée du bâtiment, selon un second mode de réalisation ;
- la Fig. 7 illustre schématiquement un algorithme, mis en œuvre par le dispositif de contrôle, de contremesure suite à une détection de présence d'eau par formation de condensation au niveau de l'isolant d'au moins une paroi isolée du bâtiment, selon un troisième mode de réalisation ;
- la Fig. 8 illustre schématiquement un profil de température ; et
- la Fig. 9 illustre schématiquement un profil de pression de vapeur d'eau.

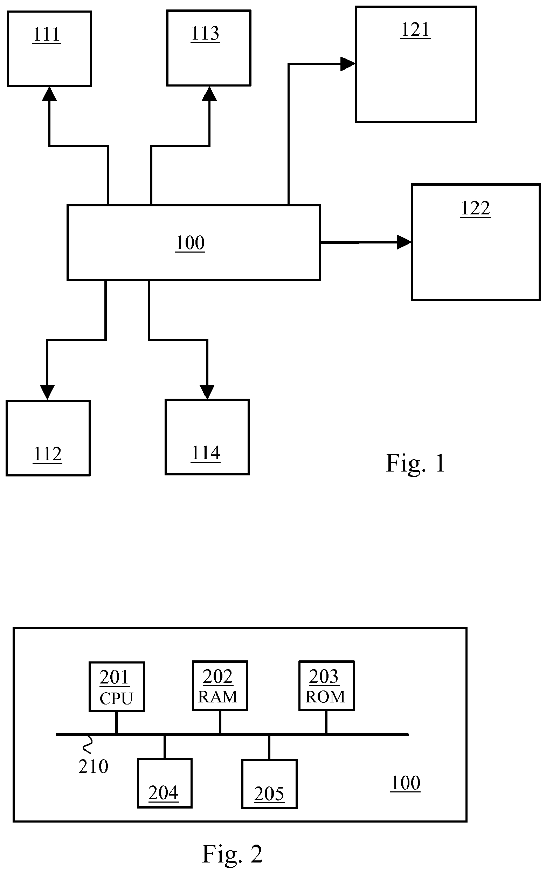

La Fig. 1 illustre schématiquement un système de régulation de migration de vapeur d'eau dans des parois isolées d'un bâtiment. Le système représenté sur la Fig. 1 comporte un premier ensemble 111 de capteurs de température fournissant des mesures de température aux abords des parois isolées du bâtiment, côté intérieur. Le système représenté sur la Fig. 1 comporte en outre un second ensemble 112 de capteurs de température fournissant des mesures de température aux abords des parois isolées du bâtiment, côté extérieur.

Le système représenté sur la Fig. 1 comporte en outre un troisième ensemble 113 de capteurs d'hygrométrie fournissant des mesures de pression de vapeur d'eau aux abords des parois isolées du bâtiment, côté intérieur. Le système représenté sur la Fig. 1 comporte en outre un quatrième ensemble 114 de capteurs d'hygrométrie fournissant des mesures de pression de vapeur d'eau aux abords des parois isolées du bâtiment, côté extérieur.

Le système représenté sur la Fig. 1 comporte en outre un système de ventilation 121 de type VMC (« Ventilation Mécanique Contrôlée ») destiné à assurer un renouvellement de l'air à l'intérieur du bâtiment.

Le système de ventilation 121 peut être de type VMC simple flux. Le système de ventilation 121 comporte alors un boîtier comportant un ventilateur aspirant l'air à l'intérieur du bâtiment pour le rejeter à l'extérieur du bâtiment. L'aspiration de l'air est typiquement effectuée via des bouches d'extraction situées dans les pièces humides, et la dépression ainsi créée assure que l'air humide ne circule pas dans le reste du bâtiment. Cette mise en dépression force également l'air extérieur à entrer dans le bâtiment par des ouvertures dédiées réparties dans le bâtiment. Le débit d'air aspiré par le ventilateur peut alors être paramétré, selon au moins deux positions (vitesse réduite, vitesse élevée).

Le système de ventilation 121 peut en variante être de type VMC simple flux hygroréglable. Le système de ventilation 121 comporte alors aussi un boîtier comportant un ventilateur aspirant l'air à l'intérieur du bâtiment pour le rejeter à l'extérieur du bâtiment. L'action du ventilateur peut alors être paramétrée à l'aide d'une consigne de pression de vapeur d'eau (ou de taux d'humidité). La vitesse d'aspiration du ventilateur est alors augmentée si la pression de vapeur d'eau effective (i.e. mesurée) est supérieure à la valeur de consigne de pression de vapeur d'eau (ou de taux d'humidité), et vice versa. La mesure de la pression de vapeur d'eau peut être réalisée au niveau du ventilateur, l'action du ventilateur s'appliquant alors sur l'ensemble du bâtiment. La mesure de la pression de vapeur d'eau peut être réalisée au niveau de chaque bouche d'extraction, l'action du ventilateur s'appliquant alors indépendamment sur chaque pièce du bâtiment par contrôle d'ouverture de volets sur les bouches d'extraction. Des ventilateurs indépendants pourraient aussi être mis en œuvre sur les bouches d'extraction.

Le système de ventilation 121 peut en variante être de type VMC double flux, hygroréglable ou non. La différence avec des systèmes de ventilation de type VMC simple flux réside dans le fait que le système insuffle en outre de l'air extérieur dans le bâtiment, typiquement dans les pièces sèches (séjour et chambres, principalement), ce qui permet d'accoupler ledit système à un échangeur thermique permettant l'hiver de préchauffer l'air insufflé dans le bâtiment à l'aide de l'air expulsé du bâtiment, limitant ainsi les déperditions énergétiques liées au renouvellement de l'air dans le bâtiment.

Le système représenté sur la Fig. 1 comporte préférentiellement en outre un système de chauffage 122 destiné à chauffer l'intérieur du bâtiment. Le système de chauffage 122 comporte préférentiellement au moins un radiateur paramétrable à distance par pièce du bâtiment. L'action de chauffe du radiateur peut alors être paramétrée à l'aide d'une consigne de température. L'action de chauffe du radiateur est alors augmentée si une température mesurée par un capteur typiquement intégré au radiateur est supérieure à la valeur de consigne de température, et vice versa.

Le système représenté sur la Fig. 1 comporte en outre un dispositif de contrôle 100 destiné à paramétrer le système de ventilation 121, et éventuellement le système de chauffage 122, afin de réguler la migration de vapeur d'eau dans les parois isolées du bâtiment. Un exemple d'architecture matérielle du dispositif de contrôle 100 est détaillé ci-après en relation avec la Fig. 2.

Ainsi, le dispositif de contrôle 100 implémente un mécanisme de surveillance des parois isolées du bâtiment et du mécanisme de contremesure en cas de détection de présence d'eau par formation de condensation au niveau de l'isolant d'au moins une desdites parois isolées. Le mécanisme de surveillance des parois isolées du bâtiment vise à détecter des situations dans lesquelles la pression de vapeur d'eau effective au niveau de l'isolant est supérieure ou égale à la pression de vapeur saturante au niveau dudit isolant. Le mécanisme de contremesure vise à agir sur le système de ventilation de manière à amener la pression de vapeur d'eau effective à un niveau inférieur à la pression de vapeur saturante au niveau dudit isolant. Il est possible d'amener la pression de vapeur d'eau effective au niveau de l'isolant en augmentant la vitesse de ventilation au niveau de la paroi isolée considérée, côté intérieur, et éventuellement en abaissant la température au niveau de la paroi isolée considérée, côté intérieur.

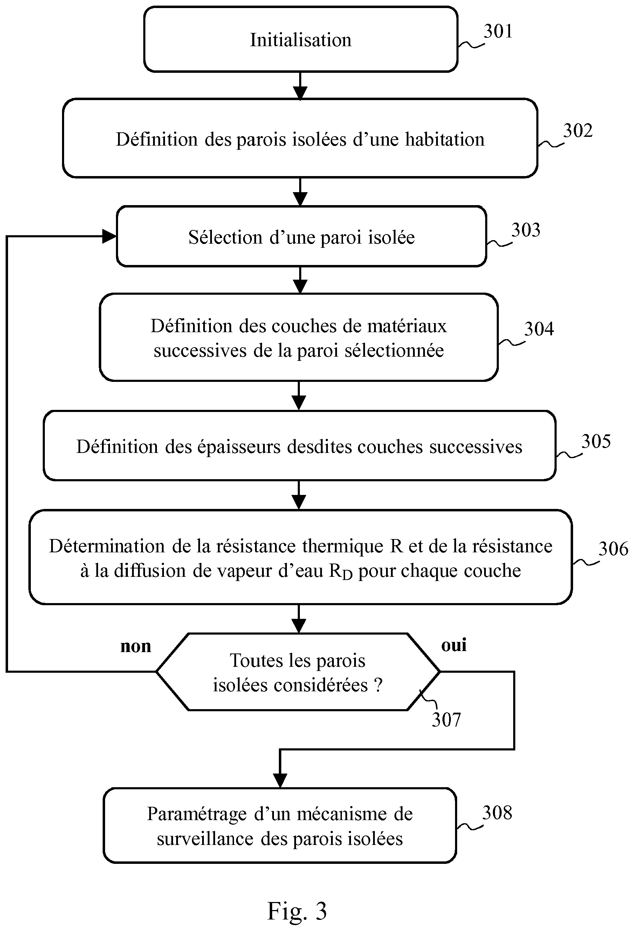

Les algorithmes décrits ci-après en relation avec les Figs. 3 à 7 représentent des modes de réalisation du mécanisme de surveillance des parois isolées du bâtiment et du mécanisme de contremesure en cas de détection de présence d'eau par formation de condensation au niveau de l'isolant d'au moins une desdites parois isolées.

Le système représenté sur la Fig. 1 est tel que les premier 111, second 112, troisième 113 et quatrième 114 ensembles de capteurs sont connectés au dispositif de contrôle 100, de sorte à transmettre au dispositif de contrôle 100 des mesures effectuées par lesdits capteurs. Le système représenté sur la Fig. 1 est en outre tel que le système de ventilation 121 est connecté au dispositif de contrôle 100, de sorte à permettre au dispositif de contrôle 100 de paramétrer ledit système de ventilation 121. Lorsque le système représenté sur la Fig. 1 comporte le système de chauffage 122, ledit système de chauffage 122 est connecté au dispositif de contrôle 100, de sorte à permettre au dispositif de contrôle 100 de paramétrer ledit système de ventilation 122.

La Fig. 2 illustre schématiquement un exemple d'architecture matérielle du dispositif de contrôle 100.

Le dispositif de contrôle 100 comprend alors, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage ou un lecteur de support de stockage, tel qu'un lecteur de cartes SD (« Secure Digital » en anglais) 204 ; une interface 205 permettant au dispositif de contrôle 100 d'interagir avec les autres composantes du système de régulation de migration de vapeur d'eau.

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication. Lorsque le dispositif de contrôle 100 est mis sous tension, le processeur 201 est capable de lire de la RAM 202 des instructions et de les exécuter. Ces instructions forment un programme d'ordinateur causant la mise en œuvre, par le processeur 201, de tout ou partie des algorithmes et étapes décrits ci-après en relation avec les Figs. 3 à 7.

Tout ou partie des algorithmes et étapes décrits ci-après en relation avec les Figs. 3 à 7 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

La Fig. 3 illustre schématiquement un algorithme, mis en œuvre par le dispositif de contrôle 100, de paramétrage du mécanisme de surveillance des parois isolées du bâtiment. Ce paramétrage correspond à une phase d'initialisation dudit mécanisme de surveillance.

Dans une étape 301, le dispositif de contrôle 100 initialise le paramétrage du mécanisme de surveillance des parois isolées avec des valeurs par défaut.

Dans une étape 302 suivante, le dispositif de contrôle 100 obtient une définition des parois isolées du bâtiment. Par exemple, cette définition est effectuée par un utilisateur via des menus d'une interface utilisateur graphique GUI (« Graphical User Interface » en anglais) proposée par le dispositif de contrôle 100 via un écran intégré au dispositif de contrôle ou qui lui est directement ou indirectement connecté (e.g. via un serveur Web embarqué dans le dispositif de contrôle 100). D'autres approches peuvent être mises en œuvre, comme une lecture de fichier selon un format prédéfini stocké sur une carte SD.

Dans une étape 303 suivante, le dispositif de contrôle 100 sélectionne une paroi isolée parmi les parois isolées définies à l'étape 302.

Dans une étape 304 suivante, le dispositif de contrôle 100 obtient une définition des couches successives des matériaux constitutifs de la paroi isolée sélectionnée à l'étape 303. Par exemple, cette définition est effectuée par un utilisateur via des menus de l'interface utilisateur graphique GUI, ou par lecture de fichier selon un format prédéfini stocké sur la carte SD. La définition des couches successives des matériaux constitutifs de la paroi isolée sélectionnée permet ainsi au dispositif de contrôle 100 de déterminer, grâce à une base de données dédiée, la perméabilité $\pi$ à la vapeur d'eau et un coefficient de conductivité thermique $\lambda$ de chaque matériau constitutif de la paroi isolée sélectionnée. Le coefficient de conductivité thermique $\lambda$, exprimé typiquement en Watts par mètre Kelvin (W/(m.K)) est une caractéristique constante, intrinsèque et propre à chaque matériau, et est représentatif de l'aptitude du matériau à plus ou moins laisser passer un flux de chaleur. Plus particulièrement, le coefficient de conductivité thermique $\lambda$ représente la quantité d'énergie traversant un mètre carré du matériau en une seconde, pour un mètre d'épaisseur, et pour un gradient de température d'un Kelvin entre les deux surfaces externes du matériau.

Dans une étape 305 suivante, le dispositif de contrôle 100 obtient une définition des épaisseurs des couches successives des matériaux constitutifs de la paroi isolée sélectionnée. Par exemple, cette définition est effectuée par un utilisateur via des menus de l'interface utilisateur graphique GUI, ou par lecture de fichier selon un format prédéfini stocké sur la carte SD.

Dans une étape 306 suivante, le dispositif de contrôle 100 détermine la résistance à la diffusion de vapeur d'eau $R_D$ de chaque couche de la paroi isolée sélectionnée, à partir de la perméabilité $\pi$ à la vapeur d'eau du matériau de ladite couche et de l'épaisseur de ladite couche. En outre, le dispositif de contrôle 100 détermine la résistance thermique $R$ de chaque couche de la paroi isolée sélectionnée, à partir du coefficient de conductivité thermique $\lambda$ du matériau de ladite couche et de l'épaisseur de ladite couche.

Dans une étape 307 suivante, le dispositif de contrôle 100 vérifie si toutes les parois isolées définies à l'étape 302 ont été considérées. Si tel est le cas, une étape 308 est effectuée ; sinon, l'étape 303 est réitérée en sélectionnant une paroi isolée qui n'a pas encore été considérée.

Dans l'étape 308, le dispositif de contrôle 100 effectue un paramétrage du mécanisme de surveillance des parois isolées du bâtiment avec la résistance à la diffusion de vapeur d'eau $R_D$ et la résistance thermique $R$ de chaque couche de chaque paroi isolée du bâtiment.

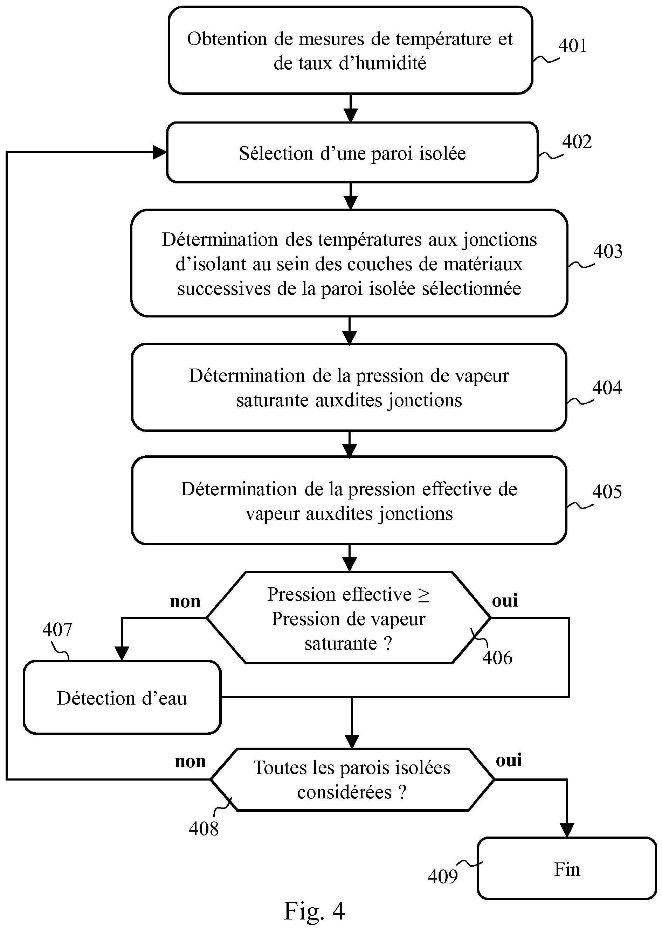

La Fig. 4 illustre schématiquement un algorithme, mis en œuvre par le dispositif de contrôle 100, de surveillance des parois isolées du bâtiment. La mise en œuvre de cet algorithme par le dispositif de contrôle 100 correspond à l'activation du mécanisme de surveillance des parois isolées du bâtiment, tel que par exemple paramétré à l'aide de l'algorithme de la Fig. 3.

Dans une étape 401, le dispositif de contrôle 100 obtient des informations représentatives de mesures de température et de pression de vapeur d'eau aux abords des parois isolées du bâtiment.

Dans une étape 402 suivante, le dispositif de contrôle 100 sélectionne une paroi isolée parmi les parois isolées du bâtiment, telles que définies à l'étape 302.

Dans une étape 403 suivante, le dispositif de contrôle 100 détermine des températures effectives aux jonctions d'isolant au sein des couches successives de matériaux constitutifs de la paroi isolée sélectionnée, à partir des mesures de température aux abords de la paroi isolée sélectionnée, c'est-à-dire des mesures de température intérieure et extérieure (*i.e.* de part et d'autre de ladite paroi isolée sélectionnée), et à partir de la résistance thermique $R$ de chaque couche de ladite paroi isolée sélectionnée. On entend par jonction d'isolant une surface de contact entre une couche d'isolant de la paroi isolée considérée et une autre couche de ladite paroi isolée.

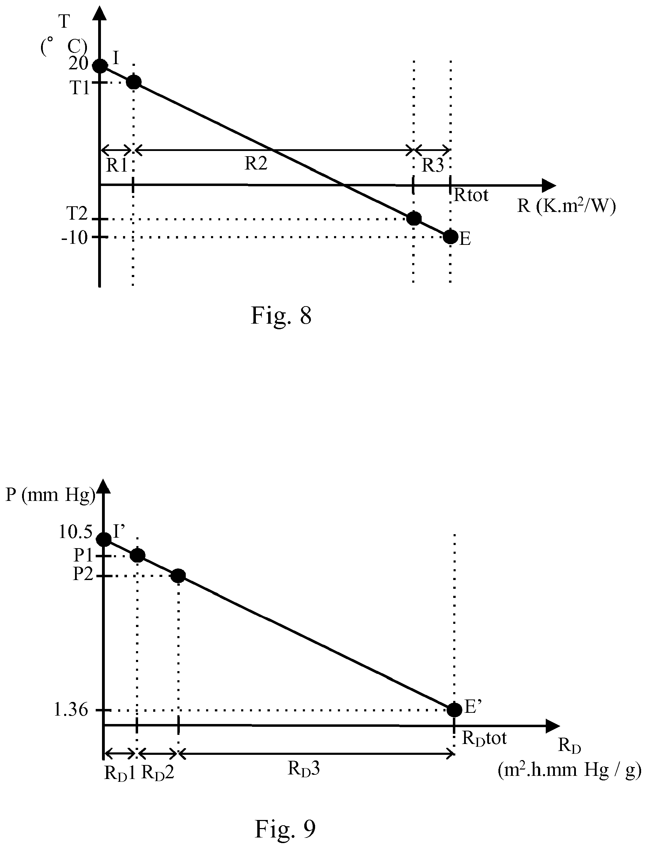

Un profil de température peut être déduit des mesures de température intérieure et extérieure (*i.e.* de part et d'autre de ladite paroi isolée sélectionnée), et à partir de la résistance thermique $R$ de chaque couche de ladite paroi isolée sélectionnée. Un tel profil de température est schématiquement représenté sur la Fig. 8.

Nous voyons sur le profil de température schématiquement représenté sur la Fig. 8 que la température est donnée en degrés Celsius (°C) et est représentée en ordonnées (axe vertical), et que la résistance thermique $R$ est donnée en Kelvins mètres carrés par Watt (K.m$^2$ / W) et est représentée en abscisses (axe horizontal). Sur la gauche du profil, pour R = 0, se trouve un point I correspondant à la mesure de température aux abords de la paroi isolée considérée, côté intérieur du bâtiment, par exemple 20 °C. La résistance thermique *Rtot* de ladite paroi isolée considérée est la somme des résistances thermiques $R$ des couches successives de matériaux constitutifs de ladite paroi isolée considérée. En considérant que la paroi isolée considérée comporte trois couches successives de l'intérieur du bâtiment vers l'extérieur du bâtiment *C1* (par exemple de type plâtre), *C2* (par exemple de type isolant à base de laine de verre), C3 (par exemple de type mur en parpaings) de résistances thermiques respectives *R1, R2* et *R3 : Rtot = R1 + R2 + R3*. Sur la droite du profil, pour R = *Rtot*, se trouve un point E correspondant à la mesure de température aux abords de la paroi isolée considérée, côté extérieur du bâtiment, par exemple -10 °C. La valeur de température *T1* pour le point, sur la droite passant par les points *I* et *E*, qui correspond à la valeur R = R1 est la température effective à la jonction entre les couches C1 et C2 (isolant). La valeur de température *T2* pour le point, sur la droite passant par les points *I* et *E*, qui correspond à la valeur R = R1 + R2 est la température effective à la jonction entre les couches *C2* (isolant) et *C3*. En prenant par exemple, R1 = 0,15 K.m$^2$/W, R2 = 2,40 K.m$^2$/W et R3 = 0,12 K.m$^2$ / W, la température effective à la jonction entre les couches *C1* et *C2* (isolant) est de 18,5 °C et la température effective à la jonction entre les couches *C2* (isolant) et *C3* est de -8,5 °C.

De retour à la Fig. 4, dans une étape 404 suivante, le dispositif de contrôle 100 détermine la pression de vapeur saturante auxdites jonctions d'isolant, en fonction des températures respectives auxdites jonctions. Le dispositif de contrôle 100 utilise préférentiellement pour ce faire une table de vapeur saturée, fournissant une correspondance entre température et pression à laquelle un point de rosée apparaît à ladite température. Le dispositif de contrôle 100 détermine ainsi des seuils (pressions de vapeur saturante), au-delà desquels de l'eau se forme respectivement auxdites jonctions d'isolant. En considérant que la pression de vapeur d'eau côté intérieur est de 10,5 mm Hg et de 1,36 mm Hg côté extérieur, et en reprenant les exemples numériques précédemment présentés, la pression de vapeur saturante à la jonction entre les couches *C1* et *C2* (isolant) est de 16 mm Hg et la pression de vapeur saturante à la jonction entre les couches *C2* (isolant) et *C3* est de 2,3 mm Hg.

Dans une étape 405 suivante, le dispositif de contrôle 100 détermine la pression de vapeur effective auxdites jonctions d'isolant, à partir des mesures de pression de vapeur d'eau aux abords de la paroi isolée sélectionnée, c'est-à-dire des mesures de pression de vapeur d'eau intérieure et extérieure (*i.e.* de part et d'autre de ladite paroi isolée sélectionnée), et à partir de la résistance à la diffusion de vapeur d'eau $R_D$ de chaque couche de ladite paroi isolée sélectionnée.

Un profil de pression de vapeur d'eau peut être déduit des mesures de pression de valeur d'eau intérieure et extérieure (*i.e.* de part et d'autre de ladite paroi isolée sélectionnée), et à partir de la résistance à la diffusion de vapeur d'eau $R_D$ de chaque couche de ladite paroi isolée sélectionnée. Un tel profil de pression de vapeur d'eau est schématiquement représenté sur la Fig. 9.

Nous voyons sur le profil de pression de vapeur d'eau schématiquement représenté sur la Fig. 9 que la pression est donnée en millimètres de mercure (mm Hg) et est représentée en ordonnées (axe vertical), et que la résistance à la diffusion de vapeur d'eau $R_D$ est donnée en mètres carrés heures millimètres de mercure par gramme (m²·h·mm Hg / g) et est représentée en abscisses (axe horizontal). Sur la gauche du profil, pour $R_D = 0$, se trouve un point I' correspondant à la mesure de pression de vapeur d'eau aux abords de la paroi isolée considérée, côté intérieur du bâtiment, par exemple 10,5 mm Hg. La résistance à la diffusion de vapeur d'eau $R_D tot$ de ladite paroi isolée considérée est la somme des résistances à la diffusion de vapeur d'eau $R_D$ des couches successives de matériaux constitutifs de ladite paroi isolée considérée. En considérant que la paroi isolée considérée comporte les trois couches successives C1, C2, C3 déjà mentionnées ayant pour résistances à la diffusion de vapeur d'eau respectives $R_D1$, $R_D2$ et $R_D3$ : $R_D tot = R_D1 + R_D2 + R_D3$. Sur la droite du profil, pour $R_D = R_D tot$, se trouve un point E' correspondant à la mesure de pression de vapeur d'eau aux abords de la paroi isolée considérée, côté extérieur du bâtiment, par exemple 1,36 mm Hg. La valeur de pression de vapeur d'eau P1 pour le point, sur la droite passant par les points I' et E', qui correspond à la valeur $R_D = R_D1$ est la valeur de pression de vapeur d'eau effective à la jonction entre les couches C1 et C2 (isolant). La valeur de pression de vapeur d'eau P2 pour le point, sur la droite passant par les points I' et E', qui correspond à la valeur $R_D = R_D1 + R_D2$ est la pression de vapeur d'eau effective à la jonction entre les couches C2 (isolant) et C3. En prenant par exemple, $R_D1 = 1$ m²·h·mm Hg / g, $R_D2 = 1,33$ m²·h·mm Hg / g et $R_D3 = 14$ m²·h·mm Hg / g, la pression de vapeur d'eau effective P1 à la jonction entre les couches C1 et C2 (isolant) est environ de 10 mm Hg et la pression de vapeur d'eau effective P2 à la jonction entre les couches C2 (isolant) et C3 est environ de 8 mm Hg.

De retour à la Fig. 4, dans une étape 406 suivante, le dispositif de contrôle 100 vérifie, pour chaque jonction d'isolant au sein des couches successives de matériaux constitutifs de la paroi isolée sélectionnée, si la pression de vapeur d'eau effective est supérieure ou égale à la pression de vapeur saturante pour ladite jonction d'isolant. Le dispositif de contrôle 100 peut prendre en compte une marge prédéfinie. Dans ce cas, le dispositif de contrôle 100 vérifie, pour chaque jonction d'isolant au sein des couches successives de matériaux constitutifs de la paroi isolée sélectionnée, si la pression de vapeur d'eau effective plus ladite marge prédéfinie est supérieure ou égale à la pression de vapeur saturante pour ladite jonction d'isolant. Cette marge permet de compenser des imprécisions de mesure des capteurs (température et/ou hygrométrie), - soit par construction des capteurs, soit parce que des capteurs ne peuvent être positionnés exactement aux abords de chaque paroi isolée. Cette marge permet en outre au dispositif de contrôle 100 de réagir avant la formation effective de condensation au niveau de l'isolant.

En reprenant les exemples numériques précédemment présentés, la pression de vapeur d'eau effective à la jonction entre les couches C1 et C2 (isolant) est nettement inférieure à la pression de vapeur saturante à ladite jonction, et donc le dispositif de contrôle 100 détermine qu'aucune condensation n'est présente à ladite jonction. Par contre, la pression de vapeur d'eau effective à la jonction entre les couches C2 (isolant) et C3 est nettement supérieure à la pression de vapeur saturante à ladite jonction, et donc le dispositif de contrôle 100 détermine que de la condensation est présente à ladite jonction. Si une présence d'eau est ainsi détectée par formation de condensation à au moins une jonction d'isolant de ladite paroi isolée sélectionnée, une étape 407 est effectuée ; sinon, une étape 408 est effectuée.

Dans l'étape 407, le dispositif de contrôle 100 génère un événement représentatif d'une détection de présence d'eau par formation de condensation à au moins une jonction d'isolant de ladite paroi isolée sélectionnée. Ledit événement indique préférentiellement chaque jonction d'isolant de ladite paroi isolée sélectionnée pour laquelle une présence d'eau par formation de condensation a été détecté. Cet événement est ensuite traité dans le cadre du mécanisme de contremesure. Puis l'étape 408 est effectuée.

Dans l'étape 408, le dispositif de contrôle 100 vérifie si toutes les parois isolées définies à l'étape 302 ont été considérées. Si tel est le cas, une étape 409 est effectuée dans laquelle il est mis fin à l'algorithme ; sinon, l'étape 402 est réitérée en sélectionnant une paroi isolée qui n'a pas encore été considérée.

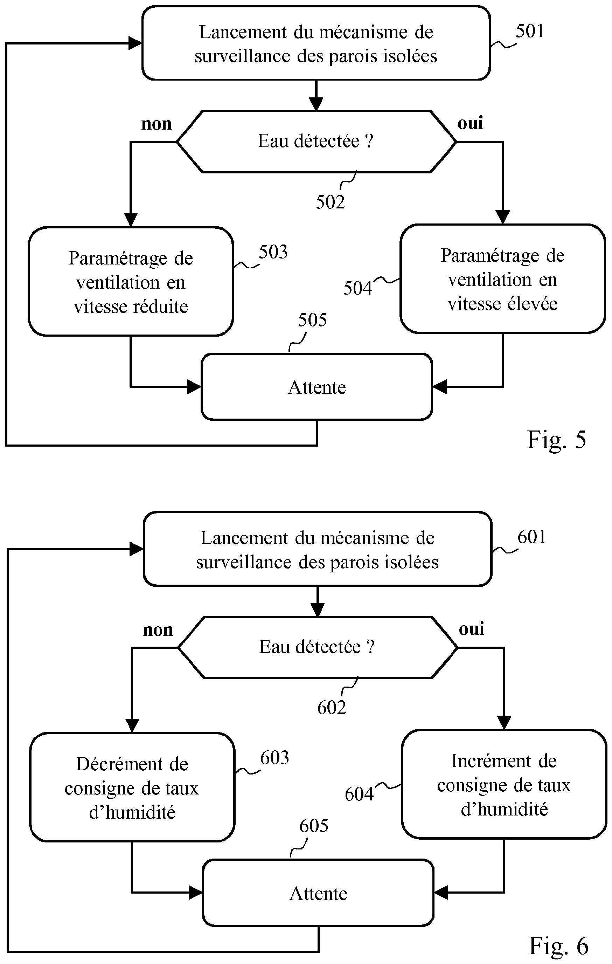

La Fig. 5 illustre schématiquement un algorithme, mis en œuvre par le dispositif de contrôle 100, de contremesure suite à une détection de présence d'eau par formation de condensation au niveau de l'isolant d'au moins une paroi isolée du bâtiment, selon un premier mode de réalisation. Le système de ventilation 121 est alors typiquement de type VMC simple ou double flux, non hygroréglable.

Dans une étape 501, le dispositif de contrôle 100 lance le mécanisme de surveillance des parois isolées, tel que par exemple précédemment décrit en relation avec la Fig. 4.

Dans une étape 502 suivante, le dispositif de contrôle 100 vérifie si le mécanisme de surveillance des parois isolées a révélé une présence d'eau par formation de condensation à au moins une jonction d'isolant d'au moins une paroi isolée du bâtiment. Par exemple, en cas de telle détection, le dispositif de contrôle 100 a généré un événement dédié, tel que précédemment décrit en relation avec la Fig. 4. Si une telle présence d'eau a été détectée, une étape 504 est effectuée ; sinon, une étape 503 est effectuée.

Dans l'étape 503, le dispositif de contrôle 100 instruit le système de ventilation 121 de diminuer la vitesse de ventilation. Plus particulièrement, lorsque le système de ventilation 121 comporte un ventilateur paramétrable selon deux positions (vitesse réduite, vitesse élevée), le dispositif de contrôle 100 instruit le système de ventilation 121 de passer en vitesse réduite, si ce n'est déjà le cas. Cette action peut être effectuée uniquement pour les pièces du bâtiment dans les parois isolées desquelles aucune présence d'eau par condensation n'est détectée à au moins une jonction d'isolant. Puis, une étape 505 est effectuée.

Dans l'étape 504, le dispositif de contrôle 100 instruit le système de ventilation 121 d'augmenter la vitesse de ventilation. Plus particulièrement, lorsque le système de ventilation 121 comporte un ventilateur paramétrable selon deux positions (vitesse réduite, vitesse élevée), le dispositif de contrôle 100 instruit le système de ventilation 121 de passer en vitesse élevée, si ce n'est déjà le cas. L'augmentation de la vitesse de ventilation a pour effet de tendre à équilibrer la pression de vapeur effective entre l'intérieur et l'extérieur du bâtiment, de manière à limiter, voire empêcher, la formation de condensation au niveau des couches d'isolant des parois isolées du bâtiment. Cette action peut être effectuée uniquement pour les pièces du bâtiment comportant au moins une paroi isolée pour laquelle une présence d'eau par condensation a été détectée à au moins une jonction d'isolant. Puis, l'étape 505 est effectuée.

Dans l'étape 505, le dispositif de contrôle 100 se met en attente d'expiration d'une temporisation de durée prédéfinie, de sorte à attendre de voir d'éventuels effets des instructions fournies à l'étape 503 ou 504, avant de réitérer l'étape 501 pour relancer le mécanisme de surveillance des parois isolées.

La Fig. 6 illustre schématiquement un algorithme, mis en œuvre par le dispositif de contrôle 100, de contremesure suite à une détection de présence d'eau par formation de condensation au niveau de l'isolant d'au moins une paroi isolée du bâtiment, selon un second mode de réalisation. Le système de ventilation 121 est alors typiquement de type VMC simple ou double flux, hygroréglable.

Dans une étape 601, le dispositif de contrôle 100 lance le mécanisme de surveillance des parois isolées, tel que par exemple précédemment décrit en relation avec la Fig. 4.

Dans une étape 602 suivante, le dispositif de contrôle 100 vérifie si le mécanisme de surveillance des parois isolées a révélé une présence d'eau par formation de condensation à au moins une jonction d'isolant d'au moins une paroi isolée du bâtiment. Par exemple, en cas de telle détection, le dispositif de contrôle 100 a généré un événement dédié, tel que précédemment décrit en relation avec la Fig. 4. Si une telle présence d'eau a été détectée, une étape 604 est effectuée ; sinon, une étape 603 est effectuée.

Dans l'étape 603, le dispositif de contrôle 100 incrémente, si possible (en fonction des capacités du système de ventilation 121 et/ou de potentielles bornes de fonctionnement prédéterminées du système de ventilation 121), la consigne de pression de vapeur d'eau (ou de taux d'humidité) qui contrôle le système de ventilation 121. L'effet est que le système de ventilation 121 diminue la vitesse de ventilation. Cette action peut être effectuée uniquement pour les pièces du bâtiment dans les parois isolées desquelles aucune présence d'eau par condensation n'est détectée à au moins une jonction d'isolant. Puis, une étape 605 est effectuée.

Dans l'étape 604, le dispositif de contrôle 100 décrémente, si possible (en fonction des capacités du système de ventilation 121 et/ou de potentielles bornes de fonctionnement prédéterminées du système de ventilation 121), la consigne de pression de vapeur d'eau (ou de taux d'humidité) qui contrôle le système de ventilation 121. L'effet est que le système de ventilation 121 augmente la vitesse de ventilation. L'augmentation de la vitesse de ventilation a pour effet de tendre à équilibrer la pression de vapeur effective entre l'intérieur et l'extérieur du bâtiment, de manière à limiter, voire empêcher, la formation de condensation au niveau des couches d'isolant des parois isolées du bâtiment. Cette action peut être effectuée uniquement pour les pièces du bâtiment comportant au moins une paroi isolée pour laquelle une présence d'eau par condensation a été détectée à au moins une jonction d'isolant. Puis, l'étape 605 est effectuée.

Dans l'étape 605, le dispositif de contrôle 100 se met en attente d'expiration d'une temporisation de durée prédéfinie, de sorte à attendre de voir d'éventuels effets des instructions fournies à l'étape 603 ou 604, avant de réitérer l'étape 601 pour relancer le mécanisme de surveillance des parois isolées.

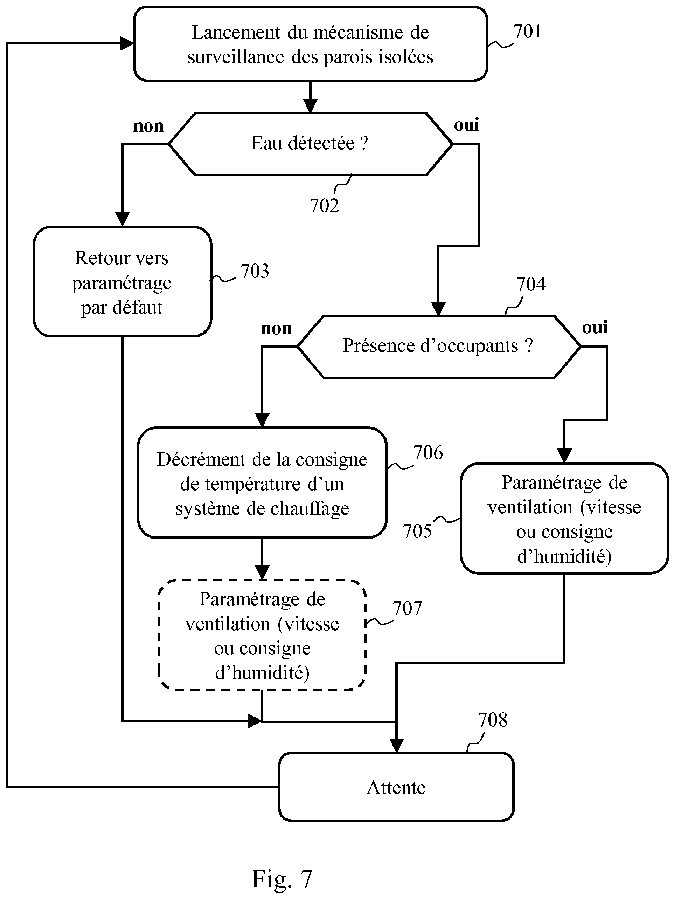

La Fig. 7 illustre schématiquement un algorithme, mis en œuvre par le dispositif de contrôle 100, de contremesure suite à une détection de présence d'eau par formation de condensation au niveau de l'isolant d'au moins une paroi isolée du bâtiment, selon un troisième mode de réalisation.

Dans une étape 701, le dispositif de contrôle 100 lance le mécanisme de surveillance des parois isolées, tel que par exemple précédemment décrit en relation avec la Fig. 4.

Dans une étape 702 suivante, le dispositif de contrôle 100 vérifie si le mécanisme de surveillance des parois isolées a révélé une présence d'eau par formation de condensation à au moins une jonction d'isolant d'au moins une paroi isolée du bâtiment. Par exemple, en cas de telle détection, le dispositif de contrôle 100 a généré un événement dédié, tel que précédemment décrit en relation avec la Fig. 4. Si une telle présence d'eau a été détectée, une étape 704 est effectuée ; sinon, une étape 703 est effectuée.

Dans l'étape 703, le dispositif de contrôle 100 instruit le système de ventilation 121 de revenir à un paramétrage par défaut. Comme dans le cadre des Figs. 5 et 6, le dispositif de contrôle peut en variante instruire le système de ventilation 121 de réduire la vitesse de ventilation, ou décrémenter la consigne de pression de vapeur d'eau (ou de taux d'humidité) qui contrôle le système de ventilation 121. En outre, le dispositif de contrôle 100 instruit le système de chauffage 122 de restaurer un paramétrage par défaut. Ce paramétrage par défaut peut dépendre de la présence ou non d'occupants dans le bâtiment, e.g. mode « confort» en présence d'occupants et mode « économique » sinon. Cette action peut être effectuée uniquement pour les pièces du bâtiment dans les parois isolées desquelles aucune présence d'eau par condensation n'est détectée à au moins une jonction d'isolant. Une étape 708 est ensuite effectuée.

Dans l'étape 704, le dispositif de contrôle 100 vérifie si au moins un occupant est présent dans le bâtiment. Diverses méthodes peuvent permettre de déterminer si le dispositif de contrôle 100 doit considérer, ou pas, qu'au moins un occupant est présent dans le bâtiment. Par exemple, le dispositif de contrôle 100 peut permettre à un utilisateur de définir un planning par jour, ou par semaine, de présence d'au moins un occupant dans le bâtiment. Une telle définition peut être effectuée via des menus de l'interface utilisateur graphique GUI déjà mentionnée, ou par lecture de fichier selon un format prédéfini stocké sur une carte SD. Selon un autre exemple, le dispositif de contrôle 100 peut déterminer un tel planning par apprentissage des habitudes des occupants du bâtiment. Le dispositif de contrôle 100 peut être connecté à un thermostat qui pilote le système de chauffage 122. Pendant une phase d'apprentissage, le thermostat informe le dispositif de contrôle 100 des instants du jour, ou de la semaine, auxquels un utilisateur actionne le thermostat pour baisser significativement la température ambiante à l'intérieur du bâtiment, considérant alors que plus aucun occupant n'est présent dans le bâtiment. Pendant la phase d'apprentissage, le thermostat informe le dispositif de contrôle 100 des instants du jour, ou de la semaine, auxquels un utilisateur actionne le thermostat pour augmenter significativement la température ambiante à l'intérieur du bâtiment, considérant alors qu'au moins un occupant est présent dans le bâtiment. Selon encore un autre exemple, le dispositif de contrôle 100 peut être connecté à un interrupteur placé à côté de la porte d'entrée du bâtiment, que chaque occupant arrivant en premier dans le bâtiment place dans une première position pour indiquer qu'au moins un occupant est présent dans le bâtiment, et que chaque occupant partant en dernier du bâtiment place dans une seconde position pour indiquer que plus aucun occupant n'est présent dans le bâtiment. Si le dispositif de contrôle 100 considère qu'aucun occupant n'est présent dans le bâtiment, une étape 706 est effectuée ; sinon, une étape 705 est effectuée.

Dans l'étape 705, le dispositif de contrôle 100 instruit le système de ventilation 121 d'augmenter la vitesse de ventilation, ou décrémente la consigne de pression de vapeur d'eau (ou de taux d'humidité) qui contrôle le système de ventilation 121, ce qui a pour effet que le système de ventilation 121 augmente la vitesse de ventilation. L'augmentation de la vitesse de ventilation a pour effet de tendre à équilibrer la pression de vapeur effective entre l'intérieur et l'extérieur du bâtiment, de manière à limiter, voire empêcher, la formation de condensation au niveau des couches d'isolant des parois isolées du bâtiment. Cette action peut être effectuée uniquement pour les pièces du bâtiment comportant au moins une paroi isolée pour laquelle une présence d'eau par condensation a été détectée à au moins une jonction d'isolant. Puis, l'étape 708 est effectuée.

Dans l'étape 706, le dispositif de contrôle 100 diminue la consigne de température du système de chauffage 122, afin de diminuer la température ambiante à l'intérieur du bâtiment. La diminution de la température ambiante à l'intérieur du bâtiment a pour effet d'augmenter la pression de vapeur saturante aux jonctions des couches des parois isolées du bâtiment, car d'après la relation de Clausius-Clapeyron, la pression de vapeur saturante augmente de façon non-linéaire avec la température. Cette action peut être effectuée uniquement pour les pièces du bâtiment comportant au moins une paroi isolée pour laquelle une présence d'eau par condensation a été détectée à au moins une jonction d'isolant.

Dans une étape 707 optionnelle suivante, le dispositif de contrôle 100 instruit le système de ventilation 121 d'augmenter la vitesse de ventilation, ou décrémente la consigne de pression de vapeur d'eau (ou de taux d'humidité) qui contrôle le système de ventilation 121, ce qui a pour effet que le système de ventilation 121 augmente la vitesse de ventilation. L'augmentation de la vitesse de ventilation a pour effet de tendre à équilibrer la pression de vapeur effective entre l'intérieur et l'extérieur du bâtiment, de manière à limiter, voire empêcher, la formation de condensation au niveau des couches d'isolant des parois isolées du bâtiment. Cette action peut être effectuée uniquement pour les pièces du bâtiment comportant au moins une paroi isolée pour laquelle une présence d'eau par condensation a été détectée à au moins une jonction d'isolant. Il est ainsi possible de combiner les effets de l'augmentation de vitesse de ventilation et de réduction de la température à l'intérieur du bâtiment. Puis, l'étape 708 est effectuée.

Dans l'étape 708, le dispositif de contrôle 100 se met en attente d'expiration d'une temporisation de durée prédéfinie, de sorte à attendre de voir d'éventuels effets des instructions fournies à l'étape 705 ou 706 (et éventuellement 707), avant de réitérer l'étape 701 pour relancer le mécanisme de surveillance des parois isolées.

Dans une variante de réalisation, le dispositif de contrôle 100 peut aussi ajuster la consigne de température même lorsqu'au moins un occupant est présent dans le bâtiment. Dans ce cas, le dispositif de contrôle 100 ajuste en priorité la consigne de température vis-à-vis du système de chauffage 122 dans un intervalle de température prédéfini de borne inférieure plus élevée que la borne inférieure d'un autre intervalle de température dans lequel le dispositif de contrôle 100 ajuste la consigne de température quand aucun occupant n'est présent dans le bâtiment (pour une question de confort des occupants). Lesdites bornes inférieures sont préférentiellement paramétrables par un utilisateur. Puis, le dispositif de contrôle 100 ajuste la vitesse de ventilation, e.g. via la consigne de pression de vapeur d'eau (ou de taux d'humidité), du système de ventilation 121. La consommation énergétique pour éviter la formation de condensation au niveau de l'isolant est ainsi diminuée.

Le contrôle du système de ventilation 121 décrit ici se focalise sur la régulation de la vitesse de ventilation afin de limiter, voire éviter, la formation de condensation au niveau de l'isolant des parois isolées du bâtiment. Le contrôle du système de ventilation 121 peut toutefois aussi prendre en compte une teneur en dioxyde de carbone à l'intérieur du bâtiment (e.g. passage en vitesse de ventilation élevée lorsqu'une sonde connectée au dispositif de contrôle 100 détecte à l'intérieur du bâtiment un taux de dioxyde de carbone supérieur à un seuil prédéfini). Le contrôle du système de ventilation 121 peut toutefois aussi prendre en compte une teneur en composés organiques volatiles (COV) à l'intérieur du bâtiment (e.g. passage en vitesse de ventilation élevée lorsqu'une sonde connectée au dispositif de contrôle 100 détecte à l'intérieur du bâtiment un taux de composés organiques volatiles supérieur à un seuil prédéfini).

**Revendications**

1.  Procédé de contrôle d'une ventilation mécanique contrôlée (121) d'un bâtiment comportant un ensemble de parois isolées constituées de couches successives de matériaux dont au moins un est un isolant, la ventilation mécanique contrôlée ayant une vitesse de ventilation contrôlable par un dispositif de contrôle (100), le dispositif de contrôle obtenant (401) des informations représentatives de mesures de température et de pression de vapeur d'eau de part et d'autre des parois isolées ;
    ledit procédé étant **caractérisé en ce que**, pour chaque paroi isolée, le dispositif de contrôle effectue les étapes suivantes :

    - déterminer (403), à partir des informations représentatives des mesures de température, des températures effectives à des jonctions respectives d'isolant dans ladite paroi isolée ;
    - déterminer (404), à partir des températures déterminées aux jonctions d'isolant dans ladite paroi isolée, des pressions de vapeur d'eau saturantes aux jonctions respectives d'isolant dans ladite paroi isolée ;

    - déterminer (405), à partir des informations représentatives des mesures de pression de vapeur d'eau, des pressions de vapeurs d'eau effectives aux jonctions respectives d'isolant dans ladite paroi isolée ; et
    - effectuer (406) une comparaison des pressions de vapeurs d'eau effectives aux jonctions d'isolant dans ladite paroi isolée avec les pressions de vapeur d'eau saturantes respectives ;

    et **en ce que** le dispositif de contrôle augmente (504 ; 604 ; 705 ; 707) la vitesse de ventilation de la ventilation mécanique contrôlée lorsque la comparaison montre une formation de condensation à au moins une jonction d'isolant dans au moins une paroi isolée.

2.  Procédé selon la revendication 1, **caractérisé en ce que** le dispositif de contrôle effectue une phase préalable d'initialisation comportant les étapes suivantes :

    - déterminer, grâce à une base de données dédiée, une perméabilité $\pi$ à la vapeur d'eau et un coefficient de conductivité thermique $\lambda$ de chaque matériau constitutif de chaque paroi isolée ;
    - obtenir (305) une définition des épaisseurs des couches successives des matériaux constitutifs de la paroi ;
    - déterminer (306) une résistance à la diffusion de vapeur d'eau $R_D$ de chaque couche de chaque paroi isolée, à partir de la perméabilité $\pi$ à la vapeur d'eau du matériau de ladite couche et de l'épaisseur de ladite couche ;
    - déterminer (306) une résistance thermique $R$ de chaque couche de chaque paroi isolée, à partir du coefficient de conductivité thermique $\lambda$ du matériau de ladite couche et de l'épaisseur de ladite couche ;
    et **en ce que**, pour chaque paroi isolée, le dispositif de contrôle détermine les températures effectives aux jonctions respectives d'isolant dans ladite paroi isolée, à partir en outre de la résistance thermique $R$ de chaque couche de ladite paroi isolée,
    et **en ce que**, pour chaque paroi isolée, le dispositif de contrôle détermine les pressions de vapeurs d'eau effectives aux jonctions d'isolant dans ladite paroi isolée, à partir en outre de la résistance à la diffusion de vapeur d'eau $R_D$ de chaque couche de ladite paroi isolée.

3.  Procédé selon l'une quelconque des revendications 1 et 2, **caractérisé en ce que**, la ventilation mécanique contrôlée étant hygroréglable, le dispositif de contrôle augmente la vitesse de ventilation en diminuant (604) une consigne, appliquée à ladite ventilation mécanique contrôlée hygroréglable, représentative d'une pression de vapeur d'eau cible.

4. Procédé selon l'une quelconque des revendications 1 à 3, **caractérisé en ce que**, le bâtiment disposant d'un système de chauffage (122), le dispositif de contrôle diminue (706) en outre une consigne de température, appliquée audit système de chauffage, lorsque la comparaison montre une formation de condensation à au moins une jonction d'isolant dans au moins une paroi isolée.

5. Procédé selon la revendication 4, **caractérisé en ce que** le dispositif de contrôle détermine (704) si au moins un occupant est présent dans le bâtiment et, le dispositif de contrôle diminue la consigne de température uniquement lorsque le dispositif de contrôle considère qu'aucun occupant n'est présent dans le bâtiment.

6. Procédé selon la revendication 4, **caractérisé en ce que** le dispositif de contrôle détermine (704) si au moins un occupant est présent dans le bâtiment et, lorsque le dispositif de contrôle considère qu'au moins un occupant est présent dans le bâtiment, le dispositif de contrôle agit sur la consigne de température dans un intervalle de température prédéfini de borne inférieure plus élevée que la borne inférieure d'un autre intervalle de température dans lequel le dispositif de contrôle ajuste la consigne de température quand aucun occupant n'est présent dans le bâtiment.

7. Programme d'ordinateur, **caractérisé en ce qu'**il comprend des instructions pour mettre en œuvre, par un dispositif de contrôle d'un système de ventilation d'un bâtiment, le procédé selon l'une quelconque des revendications 1 à 6, lorsque ledit programme est exécuté par un processeur dudit dispositif de contrôle.

8. Moyens de stockage, **caractérisés en ce qu'**ils stockent un programme d'ordinateur comprenant des instructions pour mettre en œuvre, par un dispositif de contrôle d'un système de ventilation d'un bâtiment, le procédé selon l'une quelconque des revendications 1 à 6, lorsque ledit programme est exécuté par un processeur dudit dispositif de contrôle.

9. Dispositif de contrôle (100) adapté pour effectuer un contrôle d'une ventilation mécanique contrôlée (121) d'un bâtiment comportant un ensemble de parois isolées constituées de couches successives de matériaux dont au moins un est un isolant, la ventilation mécanique contrôlée ayant une vitesse de ventilation contrôlable par le dispositif de contrôle, le dispositif de contrôle comportant des moyens pour obtenir (401) des informations représentatives de mesures de température et de pression de vapeur d'eau de part et d'autre des parois isolées ; ledit dispositif étant **caractérisé en ce que**, pour chaque paroi isolée, le dispositif de contrôle comporte :

- des moyens pour déterminer (403), à partir des informations représentatives des mesures de température, des températures effectives à des jonctions respectives d'isolant dans ladite paroi isolée ;
- des moyens pour déterminer (404), à partir des températures déterminées aux jonctions d'isolant dans ladite paroi isolée, des pressions de vapeur d'eau saturantes aux jonctions respectives d'isolant dans ladite paroi isolée ;
- des moyens pour déterminer (405), à partir des informations représentatives des mesures de pression de vapeur d'eau, des pressions de vapeurs d'eau effectives aux jonctions respectives d'isolant dans ladite paroi isolée ; et
- des moyens pour effectuer (406) une comparaison des pressions de vapeurs d'eau effectives aux jonctions d'isolant dans ladite paroi isolée avec les pressions de vapeur d'eau saturantes respectives ;
et **en ce que** le dispositif de contrôle comporte des moyens pour augmenter (504 ; 604 ; 705 ; 707) la vitesse de ventilation de la ventilation mécanique contrôlée lorsque la comparaison montre une formation de condensation à au moins une jonction d'isolant dans au moins une paroi isolée.

**Patentansprüche**

1. Verfahren zur Kontrolle einer kontrollierten mechanischen Belüftung (121) eines Gebäudes, das eine Einheit von isolierten Wänden aufweist, die aus aufeinanderfolgenden Schichten von Werkstoffen bestehen, von denen mindestens einer ein Isolierstoff ist, wobei die kontrollierte mechanische Belüftung eine von einer Kontrollvorrichtung (100) kontrollierbare Belüftungsgeschwindigkeit hat, wobei die Kontrollvorrichtung für Temperatur- und Wasserdampfdruck-Messwerte zu beiden Seiten der isolierten Wände repräsentative Informationen erlangt (401); wobei das Verfahren **dadurch gekennzeichnet ist, dass** die Kontrollvorrichtung für jede isolierte Wand die folgenden Schritte ausführt:

- Bestimmen (403), ausgehend von den für die Temperaturmesswerte repräsentativen Informationen, der tatsächlichen Temperaturen an jeweiligen Isolierstoff-Verbindungsflächen in der isolierten Wand;
- Bestimmen (404), ausgehend von den an den Isolierstoff-Verbindungsflächen in der isolierten Wand bestimmten Temperaturen, der Sättigungsdampfdrücke an den Isolierstoff-Verbindungsflächen in der isolierten Wand;

- Bestimmen (405), ausgehend von den für die Wasserdampfdruck-Messwerte repräsentativen Informationen, der tatsächlichen Wasserdampfdrücke an den Isolierstoff-Verbindungsflächen in der isolierten Wand; und

- Ausführen (406) eines Vergleichs der tatsächlichen Wasserdampfdrücke an den Isolierstoff-Verbindungsflächen in der isolierten Wand mit den Sättigungsdampfdrücken;

und dass die Kontrollvorrichtung die Belüftungsgeschwindigkeit der kontrollierten mechanischen Belüftung erhöht (504; 604; 705; 707), wenn der Vergleich eine Bildung von Kondensation an mindestens einer Isolierstoff-Verbindungsfläche in mindestens einer isolierten Wand zeigt.

2. Verfahren nach Anspruch 1, **dadurch gekennzeichnet, dass** die Kontrollvorrichtung eine vorhergehende Initialisierungsphase ausführt, die die folgenden Schritte aufweist:

- Bestimmen, mit Hilfe einer dedizierten Datenbank, einer Wasserdampfpermeabilität $\pi$ und eines Wärmeleitfähigkeitskoeffizienten $\lambda$ jedes jede isolierte Wand bildenden Werkstoffs;

- Erlangen (305) einer Definition der Dicken der aufeinanderfolgenden Schichten der die Wand bildenden Werkstoffe;

- Bestimmen (306) eines Widerstands gegen die Wasserdampfbewegung $R_D$ jeder Schicht jeder isolierten Wand, ausgehend von der Wasserdampfpermeabilität $\pi$ des Werkstoffs der Schicht und von der Dicke der Schicht;

- Bestimmen (306) eines Wärmewiderstands R jeder Schicht jeder isolierten Wand ausgehend vom Wärmeleitfähigkeitskoeffizienten $\lambda$ des Werkstoffs der Schicht und von der Dicke der Schicht;

und dass für jede isolierte Wand die Kontrollvorrichtung die tatsächlichen Temperaturen an den Isolierstoff-Verbindungsflächen in der isolierten Wand außerdem ausgehend vom Wärmewiderstand $R$ jeder Schicht der isolierten Wand bestimmt, und dass für jede isolierte Wand die Kontrollvorrichtung die tatsächlichen Wasserdampfdrücke an den Isolierstoff-Verbindungsflächen in der isolierten Wand außerdem ausgehend vom Widerstand gegen die Wasserdampfbewegung $R_D$ jeder Schicht der isolierten Wand bestimmt.

3. Verfahren nach einem der Ansprüche 1 und 2, **dadurch gekennzeichnet, dass**, da die kontrollierte mechanische Belüftung feuchtegeregelt ist, die Kontrollvorrichtung die Belüftungsgeschwindigkeit erhöht, indem sie einen an die feuchtegeregelte kontrollierte mechanische Belüftung angewendeten Sollwert, der für einen Ziel-Dampfdruck repräsentativ ist, verringert (604).

4. Verfahren nach einem der Ansprüche 1 bis 3, **dadurch gekennzeichnet, dass**, da das Gebäude über ein Heizungssystem (122) verfügt, die Kontrollvorrichtung außerdem einen an das Heizungssystem angewendeten Temperatursollwert verringert (706), wenn der Vergleich eine Kondensationsbildung an mindestens einer Isolierstoff-Verbindungsfläche in mindestens einer isolierten Wand zeigt.

5. Verfahren nach Anspruch 4, **dadurch gekennzeichnet, dass** die Kontrollvorrichtung bestimmt (704), ob mindestens ein Bewohner im Gebäude anwesend ist, und die Kontrollvorrichtung den Temperatursollwert nur verringert, wenn die Kontrollvorrichtung annimmt, dass kein Bewohner im Gebäude anwesend ist.

6. Verfahren nach Anspruch 4, **dadurch gekennzeichnet, dass** die Kontrollvorrichtung bestimmt (704), ob mindestens ein Bewohner im Gebäude anwesend ist, und wenn die Kontrollvorrichtung annimmt, das mindestens ein Bewohner im Gebäude anwesend ist, die Kontrollvorrichtung auf den Temperatursollwert in einem vordefinierten Temperaturbereich mit einer Untergrenze höher als die Untergrenze eines anderen Temperaturbereichs einwirkt, in dem die Kontrollvorrichtung den Temperatursollwert anpasst, wenn kein Bewohner im Gebäude anwesend ist.

7. Computerprogramm, **dadurch gekennzeichnet, dass** es Anweisungen zur Durchführung, durch eine Kontrollvorrichtung eines Belüftungssystems eines Gebäudes, des Verfahrens nach einem der Ansprüche 1 bis 6 enthält, wenn das Programm von einem Prozessor der Kontrollvorrichtung ausgeführt wird.

8. Speichereinrichtungen, **dadurch gekennzeichnet, dass** sie ein Computerprogramm speichern, das Anweisungen zur Durchführung, durch eine Kontrollvorrichtung eines Belüftungssystems eines Gebäudes, des Verfahrens nach einem der Ansprüche 1 bis 6 enthält, wenn das Programm von einem Prozessor der Kontrollvorrichtung ausgeführt wird.

9. Kontrollvorrichtung (100), die geeignet ist, eine Kontrolle einer kontrollierten mechanischen Belüftung (121) eines Gebäudes auszuführen, das eine Einheit von isolierten Wänden aufweist, die aus aufeinanderfolgenden Schichten von Werkstoffen bestehen, von denen mindestens einer ein Isolierstoff ist, wobei die kontrollierte mechanische Belüftung eine von der Kontrollvorrichtung kontrollierbare Belüftungsgeschwindigkeit hat, wobei die Kontrollvorrichtung Einrichtungen zur Erlangung von für Temperatur- und Wasserdampfdruck-Messwerte zu beiden Seiten der isolierten Wände repräsentativen Informationen aufweist (401);

wobei die Vorrichtung **dadurch gekennzeichnet ist, dass** die Kontrollvorrichtung für jede isolierte Wand aufweist:

> - Einrichtungen zur Bestimmung (403), ausgehend von den für die Temperaturmesswerte repräsentativen Informationen, der tatsächlichen Temperaturen an Isolierstoff-Verbindungsflächen in der isolierten Wand;
> - Einrichtungen zur Bestimmung (404), ausgehend von den an den Isolierstoff-Verbindungsflächen in der isolierten Wand bestimmten Temperaturen, der Sättigungsdampfdrücke an den Isolierstoff-Verbindungsflächen in der isolierten Wand;
> - Einrichtungen zur Bestimmung (405), ausgehend von den für die Wasserdampfdruck-Messwerte repräsentativen Informationen, der tatsächlichen Wasserdampfdrücke an den Isolierstoff-Verbindungsflächen in der isolierten Wand; und
> - Einrichtungen zur Ausführung (406) eines Vergleichs der tatsächlichen Wasserdampfdrücke an den Isolierstoff-Verbindungsflächen in der isolierten Wand mit den Sättigungsdampfdrücken;

und dass die Kontrollvorrichtung Einrichtungen aufweist, um die Belüftungsgeschwindigkeit der kontrollierten mechanischen Belüftung zu erhöhen (504; 604; 705; 707), wenn der Vergleich eine Bildung von Kondensation an mindestens einer Isolierstoff-Verbindungsfläche in mindestens einer isolierten Wand zeigt.

## Claims

1. Method for controlling a controlled mechanical ventilation (121) of a building comprising a set of insulating walls consisting of successive layers of materials, at least one of which is an insulator, the controlled mechanical ventilation having a ventilation speed that can be controlled by a control device (100), the control device obtaining (401) information representative of measurements of water vapour temperature and pressure on either side of the insulated walls;

said method being **characterized in that**, for each insulated wall, the control device performs the following steps:

> - determining (403), from the information representative of the temperature measurements, actual temperatures at respective joins of insulation in said insulated wall;
> - determining (404), from the temperatures determined at the joins of insulation in said insulated wall, saturating water vapour pressures at the respective joins of insulation in said insulated wall;
> - determining (405), from the information representative of the water vapour pressure measurements, actual water vapour pressures at the respective joins of insulation in said insulated wall; and
> - performing (406) a comparison of the actual water vapour pressures at the joins of insulation in said insulated wall with the respective saturating water vapour pressures;

and **in that** the control device increases (504; 604; 705; 707) the ventilation speed of the controlled mechanical ventilation when the comparison shows a formation of condensation at at least one join of insulation in at least one insulated wall.

2. Method according to Claim 1, **characterized in that** the control device performs a preliminary initialization phase comprising the following steps:

> - determining, using a dedicated database, a permeability $\pi$ to water vapour and a coefficient of thermal conductivity $\lambda$ of each constituent material of each insulated wall;
> - obtaining (305) a definition of the thicknesses of the successive layers of the constituent materials of the wall;
> - determining (306) a resistance to the water vapour diffusion $R_D$ of each layer of each insulated wall, from the permeability $\pi$ to water vapour of the material of said layer and the thickness of said layer;
> - determining (306) a thermal resistance $R$ of each layer of each insulated wall, from the coefficient of thermal conductivity $\lambda$ of the material of said layer and the thickness of said layer;

and **in that**, for each insulated wall, the control device determines the actual temperatures at the respective joins of insulation in said insulated wall, also from the thermal resistance $R$ of each layer of said insulated wall,

and **in that**, for each insulated wall, the control device determines the actual water vapour pressures at the joins of insulation in said insulated wall, also from the resistance to water vapour diffusion $R_D$ of each layer of said insulated wall.

3. Method according to either one of Claims 1 and 2, **characterized in that**, the controlled mechanical ventilation being moisture-sensitive, the control device increases the ventilation speed by reducing (604) a setpoint, applied to said moisture-sensitive controlled mechanical ventilation, representative of a target water vapour pressure.

4. Method according to any one of Claims 1 to 3, **characterized in that**, the building having a heating system (122), the control device also reduces (706) a temperature setpoint, applied to said heating system, when the comparison shows a formation of condensation at at least one join of insulation in at least one insulated wall.

5. Method according to Claim 4, **characterized in that** the control device determines (704) whether at least one occupant is present in the building, and the control device reduces the temperature setpoint only when the control device considers that no occupant is present in the building.

6. Method according to Claim 4, **characterized in that** the control device determines (704) whether at least one occupant is present in the building, and, when the control device considers that at least one occupant is present in the building, the control device acts on the temperature setpoint within a predefined temperature range with a lower limit higher than the lower limit of another temperature range in which the control device adjusts the temperature setpoint when no occupant is present in the building.

7. Computer program, **characterized in that** it comprises instructions for the implementation, by a control device of a ventilation system of a building, of the method according to any one of Claims 1 to 6, when said program is executed by a processor of said control device.

8. Storage means, **characterized in that** they store a computer program comprising instructions for the implementation, by a control device of a ventilation system of a building, of the method according to any one of Claims 1 to 6, when said program is executed by a processor of said control device.

9. Control device (100) suitable for controlling a controlled mechanical ventilation (121) of a building comprising a set of insulated walls consisting of successive layers of materials, at least one of which is an insulator, the controlled mechanical ventilation having a ventilation speed that can be controlled by the control device, the control device comprising means for obtaining (401) information representative of measurements of water vapour temperature and pressure on either side of the insulated walls; said device being **characterized in that**, for each insulated wall, the control device comprises:

- means for determining (403), from the information representative of the temperature measurements, actual temperatures at respective joins of insulation in said insulated wall;
- means for determining (404), from the temperatures determined at the joins of insulation in said insulated wall, saturating water vapour pressures at the respective joins of insulation in said insulated wall;
- means for determining (405), from the information representative of the water vapour pressure measurements, actual water vapour pressures at the respective joins of insulation in said insulated wall; and
- means for performing (406) a comparison of the actual water vapour pressures at the joins of insulation in said insulated wall with the respective saturating water vapour pressures;

and **in that** the control device comprises means for increasing (504; 604; 705; 707) the ventilation speed of the controlled mechanical ventilation when the comparison shows a formation of condensation at at least one join of insulation in at least one insulated wall.

111

113

121

100

122

112

114

Fig. 1

| 201<br>CPU | 202<br>RAM | 203<br>ROM |

210

204

205

100

Fig. 2

Initialisation — 301

Définition des parois isolées d'une habitation — 302

Sélection d'une paroi isolée — 303

Définition des couches de matériaux successives de la paroi sélectionnée — 304

Définition des épaisseurs desdites couches successives — 305

Détermination de la résistance thermique R et de la résistance à la diffusion de vapeur d'eau $R_D$ pour chaque couche — 306

**non** Toutes les parois isolées considérées ? **oui** — 307

Paramétrage d'un mécanisme de surveillance des parois isolées — 308

Fig. 3

Obtention de mesures de température et de taux d'humidité — 401

Sélection d'une paroi isolée — 402

Détermination des températures aux jonctions d'isolant au sein des couches de matériaux successives de la paroi isolée sélectionnée — 403

Détermination de la pression de vapeur saturante auxdites jonctions — 404

Détermination de la pression effective de vapeur auxdites jonctions — 405

non ← Pression effective ≥ Pression de vapeur saturante ? → oui
— 406

407 — Détection d'eau

non ← Toutes les parois isolées considérées ? → oui

408

409 — Fin

Fig. 4

Lancement du mécanisme de surveillance des parois isolées — 501

Eau détectée ? — 502

non

oui

Paramétrage de ventilation en vitesse réduite — 503

Paramétrage de ventilation en vitesse élevée

504

Attente — 505

Fig. 5

Lancement du mécanisme de surveillance des parois isolées — 601

Eau détectée ? — 602

non

oui

Décrément de consigne de taux d'humidité — 603

Incrément de consigne de taux d'humidité

604

Attente — 605

Fig. 6

Fig. 7

T
(° C)

20 ● I
T1 ━━●

R1 ◄►┊◄──────────── R2 ────────────►◄× R3
┊                                        ┊  Rtot
━━━━━━━━━━━━━━━━━━━━━━━━━━━━━━━━━━━━━► R (K.m²/W)

T2 ━━━━━━━━━━━━━━━━━━━━━━━━━━━━━━━● 
-10 ━━━━━━━━━━━━━━━━━━━━━━━━━━━━━━━━━● E

Fig. 8

P (mm Hg)

10.5 ● I'
P1 ━●
P2 ━━●

1.36 ━━━━━━━━━━━━━━━━━━━━━━━━━━━━━━━━● E'
                                          R$_D$tot
━━━━━━━━━━━━━━━━━━━━━━━━━━━━━━━━━━━━► R$_D$
R$_D$1 R$_D$2 ◄──────── R$_D$3 ────────►   (m².h.mm Hg / g)

Fig. 9

**EP 3 034 957 B1**

**RÉFÉRENCES CITÉES DANS LA DESCRIPTION**

**Documents brevets cités dans la description**

- FR 2954970 A3

- FR 2973102 A3